Europäisches Patentamt

European Patent Office

Office européen des brevets

(11) Publication number: **0 368 430 B1**

# EUROPEAN PATENT SPECIFICATION

(45) Date of publication of patent specification: **16.03.94** (51) Int. Cl.⁵: **F01M 1/14,** F01M 1/16

(21) Application number: **89250069.5**

(22) Date of filing: **31.10.89**

(54) **A lubricator for a cylinder of an internal combustion engine.**

(30) Priority: **01.11.88 JP 274586/88**
     **10.11.88 JP 282475/88**

(43) Date of publication of application:
     **16.05.90 Bulletin 90/20**

(45) Publication of the grant of the patent:
     **16.03.94 Bulletin 94/11**

(84) Designated Contracting States:
     **CH DE LI**

(56) References cited:
     **EP-A- 0 049 603**
     **CH-A- 613 495**
     **DE-A- 2 827 626**
     **DE-A- 2 929 580**

(73) Proprietor: **MITSUBISHI JUKOGYO KABUSHIKI
     KAISHA
     5-1, Marunouchi 2-chome
     Chiyoda-ku
     Tokyo(JP)**

(72) Inventor: **Irie, Yasutaka Yokohama Dockyard
     & Machinery Works
     Mitsubishi Jukogyo K.K.
     12, Nishi-cho
     Naka-ku
     Yokohama Kanagawa Pref.(JP)**
     Inventor: **Mitsui, Shoji Yokohama Technical
     Institute
     Mitsubishi Jukogyo K.K.
     12, Nishi-cho
     Naka-ku
     Yokohama Kanagawa Pref.(JP)**
     Inventor: **Miyano, Hiroaki Yokohama Dockyard
     & Machinery Work
     Mitsubishi Jukogyo K.K.
     12, Nishi-cho
     Naka-ku
     Yokohama Kanagawa Pref.(JP)**

(74) Representative: **Meissner, Peter E., Dipl.-Ing.
     et al
     Meissner & Meissner,
     Patentanwaltsbüro,
     Postfach 33 01 30
     D-14171 Berlin (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

FIELD OF THE INVENTION AND RELATED ART STATEMENT

The present invention relates to an internal combustion engine, and more particularly to a lubricator for a cylinder of a large-sized diesel engine.

In a conventional widely-used method of lubricating an inner surface of a cylinder liner of an internal combustion engine, particularly a large-sized diesel engine, lubricating oil is forcedly poured through a lubricating opening formed in the cylinder liner.

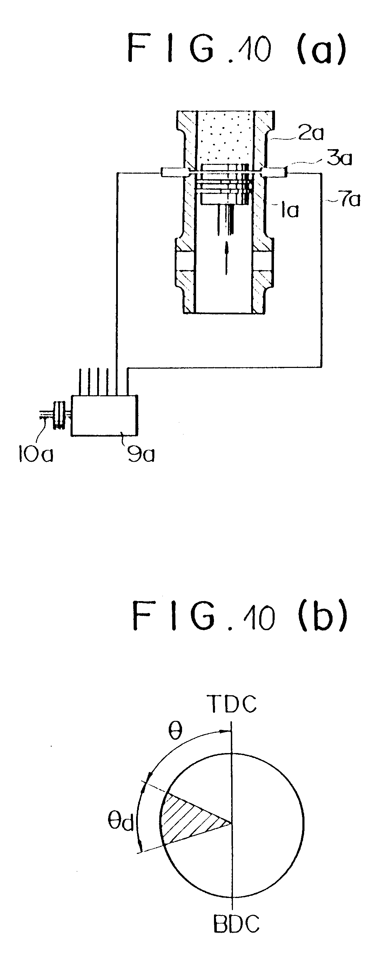

Fig. 10 illustrates a lubricator for a cylinder liner of a diesel engine for a ship.

In Fig. 10a, numeral 1a denotes a piston, 2a a cylinder liner in which the piston 1a is slidably reciprocated, 3a a lubricating rod mounted to the cylinder liner 2a externally and in which a check valve is contained, and 7a a lubricating pipe connecting a lubricating device 9a and the lubricating rod 3a. A plurality of plunger pumps are assembled in the lubricating device 9a in order to forcedly feed oil into a plurality of lubricating openings formed in the cylinder liner 2a. Plungers of the plunger pump are driven by a cam (not shown) provided therein. Numeral 10a denotes a drive shaft to which the cam is mounted and which is driven through a gear or chain by a crank shaft to feed oil at a periodical timing of a crank angle. When the drive shaft 10a is rotated, the cam in the lubricating device 9a pushes up the plunger and the pressurized oil reaches the lubricating rod through the lubricating pipe 7a to open the check valve so that the oil is fed into the cylinder liner 2a through the lubricating openings.

In Fig. 10b, $\theta$ d is a discharge period of the plunger, and the discharge is completed at a time $\theta$ before the top dead center (TDC) where the piston 1a passes through the lubricating opening. The oil fed into the cylinder is pushed up by the piston with rising of the piston 1a and is spread on the surface of the cylinder liner to lubricate the sliding surface of the piston 1a and the cylinder liner 2a.

Since the conventional lubricator drives the plunger in response to rotation of the cam interlocked with the crank shaft to feed oil for lubrication, it is not possible to change the lubricating time in response to an engine operation condition in order to attain effective lubrication. Further, it is necessary to feed a more amount of oil as compared with a necessary amount in order to prevent the failure of lubrication.

The DE-A-2929 580 describes a lubricator for a cylinder of an internal combustion engine comprising an electric motor for forcedly feeding lubricating oil in an oil tank to an accumulator, one or more control valves for feeding the lubricating oil in the accumulator to the cylinder, a pressure detector for detecting a pressure of the lubricating oil in the accumulator and a controller for supplying a drive command to the electric pump so tha the pressure of the lubricating oil in the accumulator is equal to a predetermined value on the basis of a lubricating condition, an operation condition and a signal of the pressure detector, and for deriving one or more end-of-lubrication timings on the basis of the lubricating condition, the operation condition and one or more established start-of-lubrication timings to supply to the control valve with a valve opening command when a crank angle is coincident with the start-of-lubrication timing and with a valve closing command when the crank angle is coincident with the end-of-lubrication timing.

The disadvantage is that there is only one accumulator which means that a large use of the lubricator is not given.

It is an object of the present invention to solve the disadvantages in the prior art by providing a lubricator for a cylinder capable of changing a lubricating time in response to an engine operation condition and capable of feeding a minimum amount of lubricating oil.

OBJECT AND SUMMARY OF THE INVENTION

It is an object of the invention to provide a lubricator for a cylinder of an internal combustion engine in which:

(1) lubrication can be effected before the top of a piston ring and between rings in the compression stroke;

(2) lubrication can be effected before the bottom of the piston ring and between rings in the expansion stroke;

(3) an optimum lubrication method can be attained in response to an operation condition of the engine by selecting a lubricating timing and an amount of lubricating oil properly in accordance with the above items (1) and (2); and

(4) wear of the piston ring and a cylinder liner can be reduced to improve the reliability exactly and an amount of consumption of expensive lubricating oil for the cylinder can be minimized to reduce an expense.

The object of the invention is achieved by the lubricator for a cylinder of an internal combustion engine comprising a plurality of accumulators for holding lubricating oil fed from an oil tank by a pump to a predetermined pressure, a solenoid controlled valve disposed between the pump and the accumulator, one or more control valves for feeding the lubricating oil in the accumulator to the cylinder, and a controller for selecting an accumulator to be used on the basis of a lubrication condition and an operation condition to supply a switching command to the solenoid controlled valve and deriving one or more end-of-lubrication timings on the basis of the lubrication condition, the operation condition and one or more established start-of-lubrication timings to supply to the control valve with a valve opening command when the crank angle is coincident with the start-of-lubrication timing and with a valve closing command when the crank angle is coincident with the end-of-lubrication timing.

In the accumulation type cylinder lubrication control system according to the present invention, the lubrication timing and the amount of lubricating oil are controlled independently and the cylinder liner and the piston ring are lubricated in the optimum condition corresponding to the operation condition of the engine. The system is different from a conventional lubricator in that lubricating oil is accumulated and an electro hydraulic control valve is disposed between an accumulation rod and a distributor and is driven by an output of a controller which calculates an optimum lubrication timing and an amount of lubrication oil on the basis of the operation condition of the engine separately so that control is automatically performed to be identical with a target condition.

The accumulation type cylinder lubrication control system according to the present invention can control a timing of discharging lubricating oil from the lubrication rod, that is, the lubrication timing in synchronism with any crank angle in one cycle of the piston and accordingly lubrication corresponding to lubrication before a top ring, between rings and before a bottom ring can be effected with a high speed response.

Further, an opening of the control valve and a pressure of the accumulated oil can be selectively controlled to control an amount of oil lubricated at a time freely.

Accordingly, if the optimization of the lubrication condition in accordance with the operation condition of the engine is previously programmed, the lubrication timing and the amount of lubricating oil can be controlled automatically so that wear of the piston ring and the cylinder liner can be minimized and the amount of consumption of expensive lubrication oil for the cylinder can be reduced.

BRIEF DESCRIPTION OF THE DRAWINGS

Fig. 1 shows a configuration diagram of a lubricating oil accumulator used in a first embodiment of the invention;

Fig. 2 is a configuration diagram illustrating from an electro hydraulic control valve to a lubricating rod used in the first embodiment of the invention;

Fig. 3 is a configuration diagram similar to that of Fig. 2 and used in another embodiment;

Fig. 4 shows a layout example in a cylinder liner of a lubricating rod, in which Fig. 4(a) is a cross-sectional diagram and Fig. 4(b) is a longitudinal sectional diagram;

Fig. 5 is a configuration diagram similar to that of Fig. 2 and used in still another embodiment;

Fig. 6 is a flow chart showing control operation of a controller for cylinder lubrication control in a first embodiment of the invention;

Figs. 7 and 8 are flow charts showing control operation of a further embodiment,

Fig. 9(a) and (b) are diagrams explaining operation in the first embodiment of the invention and Fig. 9(c) and (d) are diagrams explaining operation in another embodiment; and

Fig. 10(a) is a configuration diagram of a conventional device and Fig. 10(b) shows a lubrication timing in Fig. 10(a).

DETAILED DESCRIPTION OF THE PREFERRED EMBODIMENTS

An embodiment of the present invention is now described.

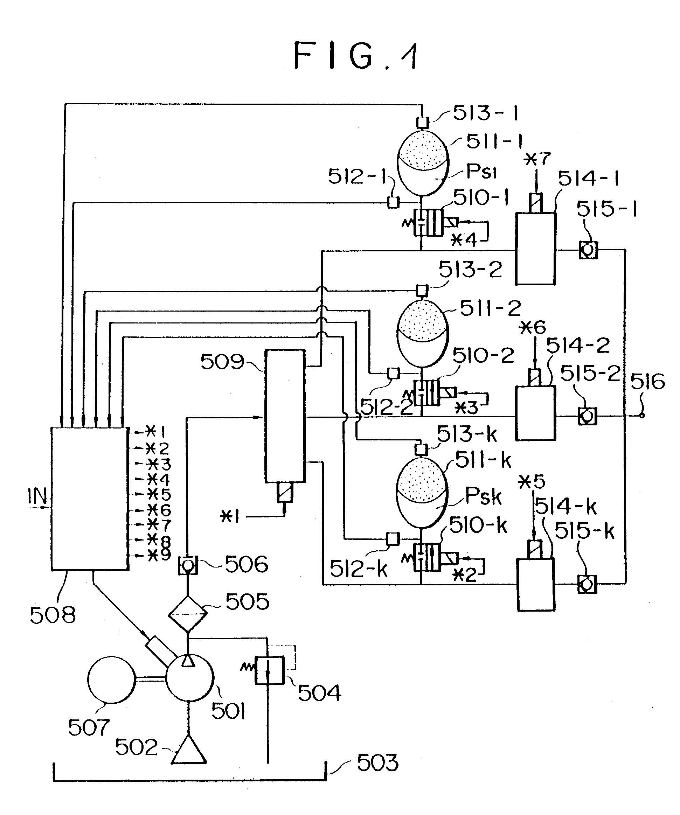

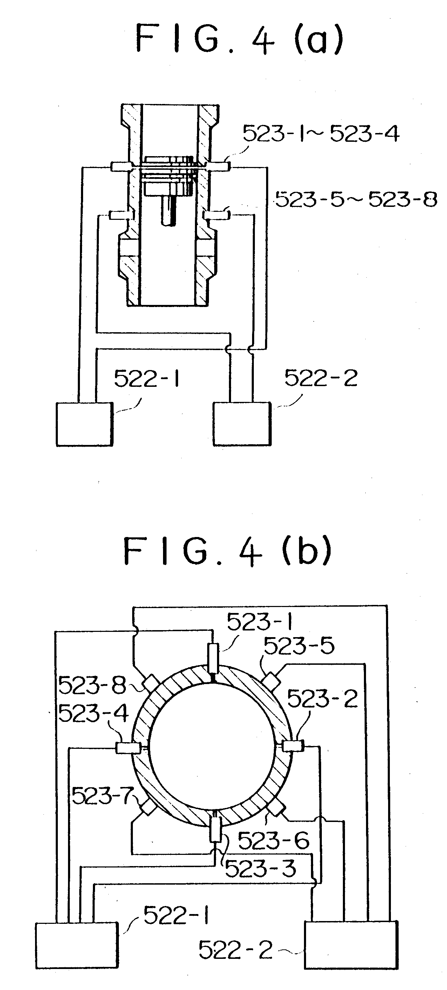

In Figs. 1 to 5, numeral 501 denotes an oil pressure pump, 502 a strainer, 503 a reservoir, 504 a relief valve, 505 a high pressure filter, 506 a cheek valve, 507 an electric motor or a cam shaft, 508 a controller, 509 a change-over solenoid controlled valve, 510-1 to 510-k change-over solenoid controlled valves for accumulators (k indicates a number of levels of accumulation), 511-1 to 511-k accumulators, 512-1 to 512-k oil pressure detectors, 513-1 to 513-k gas detectors, 514-1 to 514-k main valves, 515-1 to 515-k check valves, 516 a discharge port, 520 an electro hydraulic control valve, 521 a bypass valve, 522 a lubricating oil distribution valve, and 523 a lubricating rod.

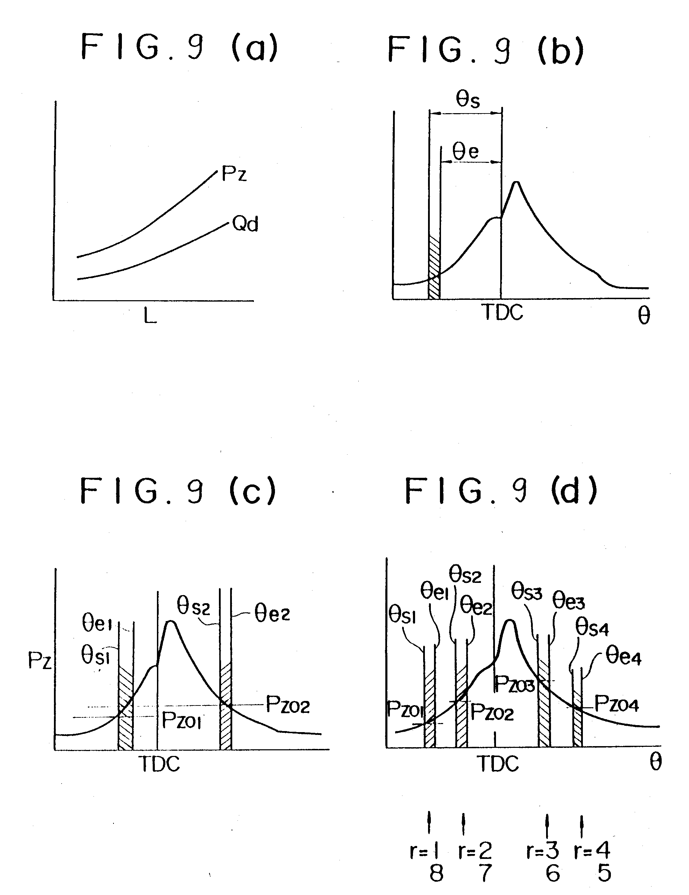

Prior to the operation of the engine, an amount of lubricating oil Q corresponding to a load L of the engine, a pressure $P_Z$ in the cylinder (refer to Fig. 9(a)), set pressures $P_{sh}$ for the accumulators 511-k (set stepwise), an effective differential pressure $P_L$, and a correction angle $\Delta \theta$ s and $\Delta \theta$ e (previously obtained discharge delay from the electro hydraulic control valve 20 to the lubricating rod 23) are supplied to the controller 508 and are stored.

On the other hand, oil pressure values are supplied from the oil pressure detectors 512-k of the accumulators 511-k to the controller, which compares each of the oil pressure values with each of the set values, respectively. When the oil pressure value is smaller than the set value, the solenoid controlled valve 509 is switched to the accumulator 511-k (*1) and the discharge amount is changed to the oil pressure pump 501 (a swash plate angle is driven) to charge the set value.

When the engine begins to operate and the number of rotation n and the crank angle $\theta$ are supplied to the controller, the controller reads the pressure $P_Z$ in the cylinder corresponding to the number of rotation n and selects the minimum accumulator 511-k set to $P_{sk} \geq P_Z + P_L$ so that the main valve 514-k corresponding to this accumulator 511-k is opened and the solenoid controlled valve 509 is switched to this accumulator 511-k (*1).

On the other hand, when the start-of-lubrication target timing $\theta$ s is supplied to the controller 508, the controller performs the following calculation and derives the end-of-lubrication target timing $\theta$ e.

$$\theta e = \theta s + 6nQ (A\mu (2g(Psi - Pz)/\tau)^{1/2})$$

The start-of-lubrication timing $\theta$ e' and the end-of-lubrication timing $\theta$ e' containing the delay characteristic are obtained as follows:

$$\theta s' = \theta s - \Delta \theta s$$
$$\theta e' = \theta e - \Delta \theta e$$

The controller compares the obtained start-of-lubrication timing $\theta$ s' and end-of-lubrication timing $\theta$ e' with the input $\theta$ and opens the electro hydraulic control valve 20 when $\theta = \theta$ s' and closes the valve when $\theta = \theta$ e'(*8).

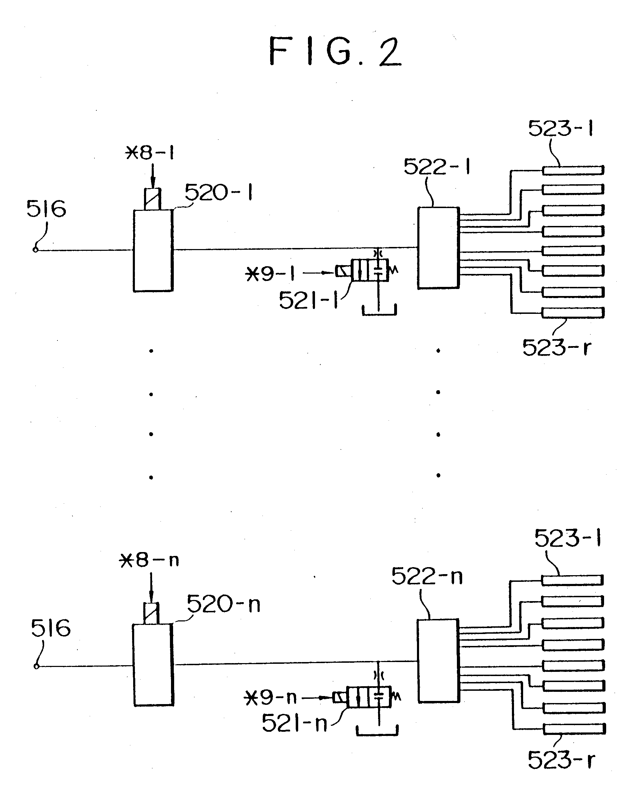

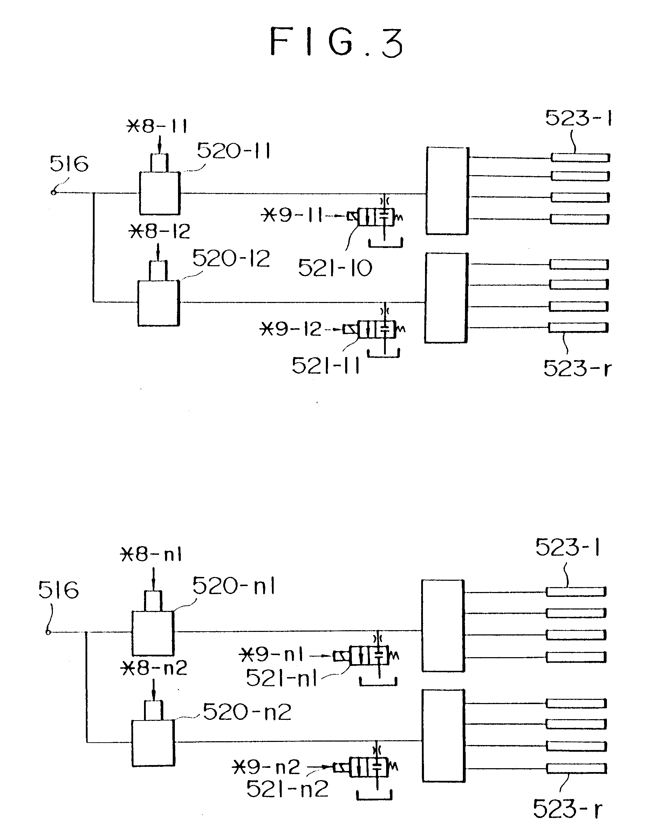

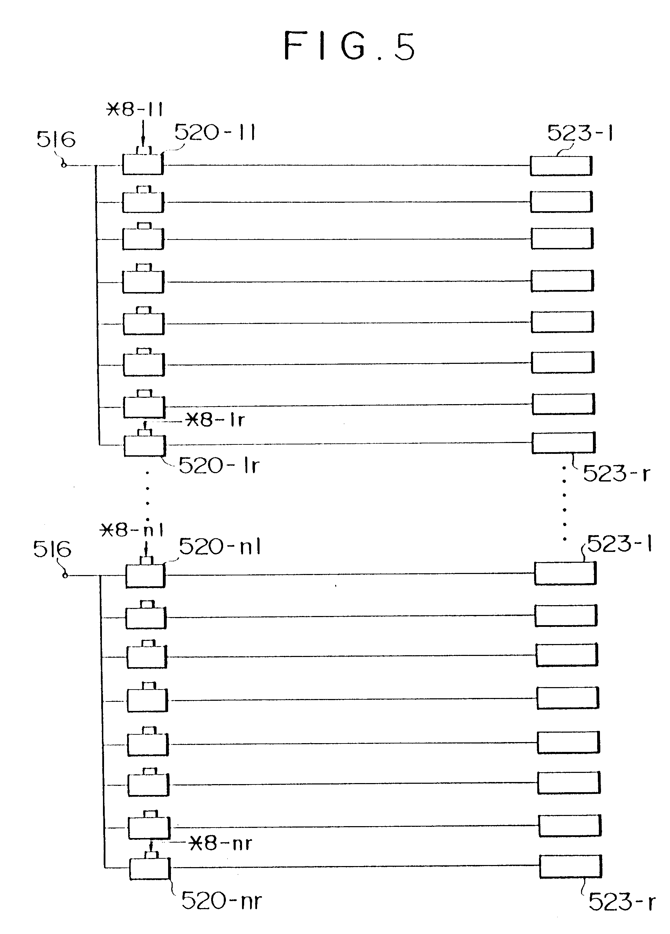

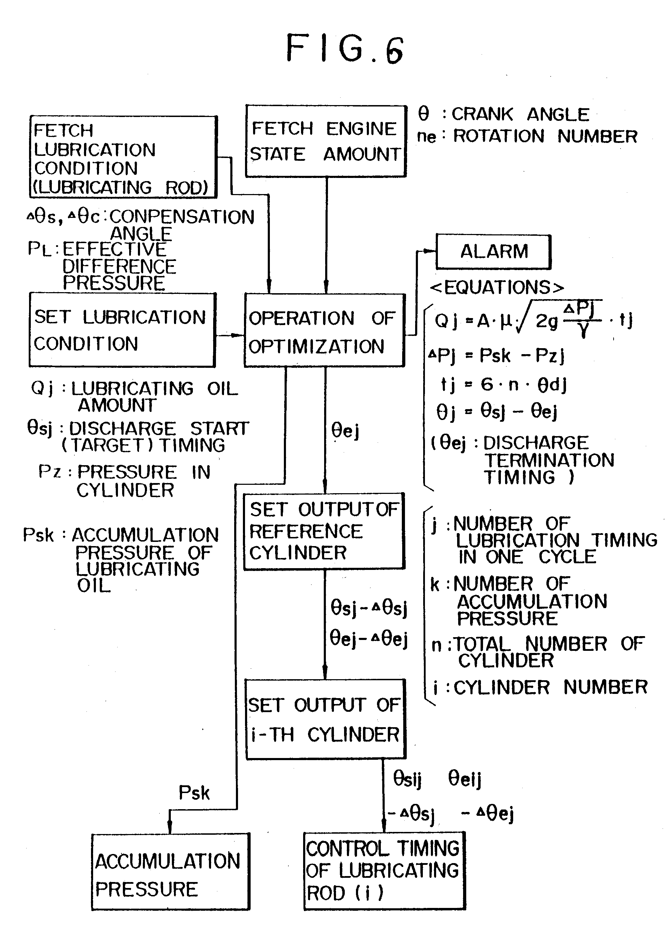

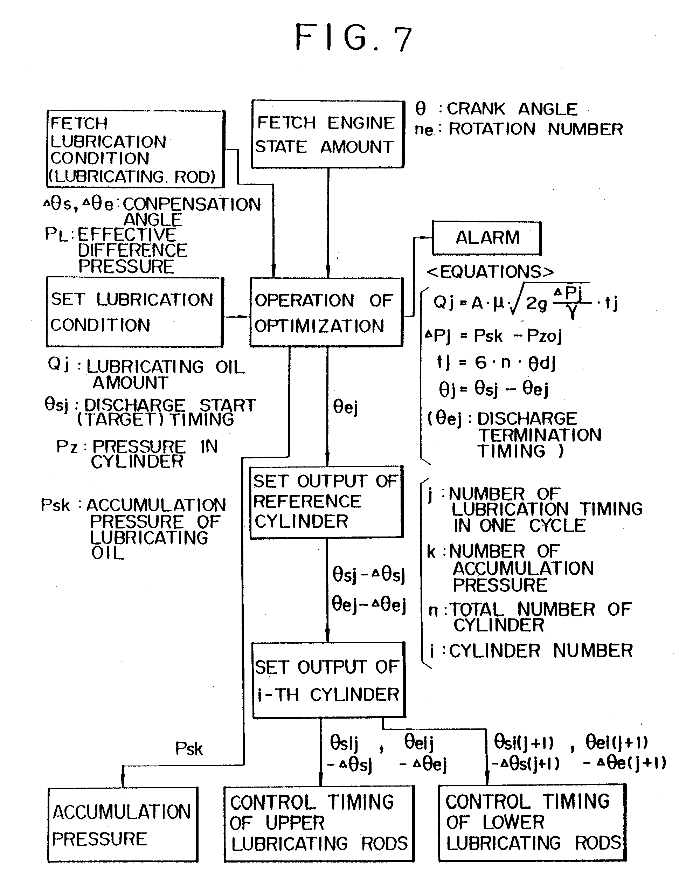

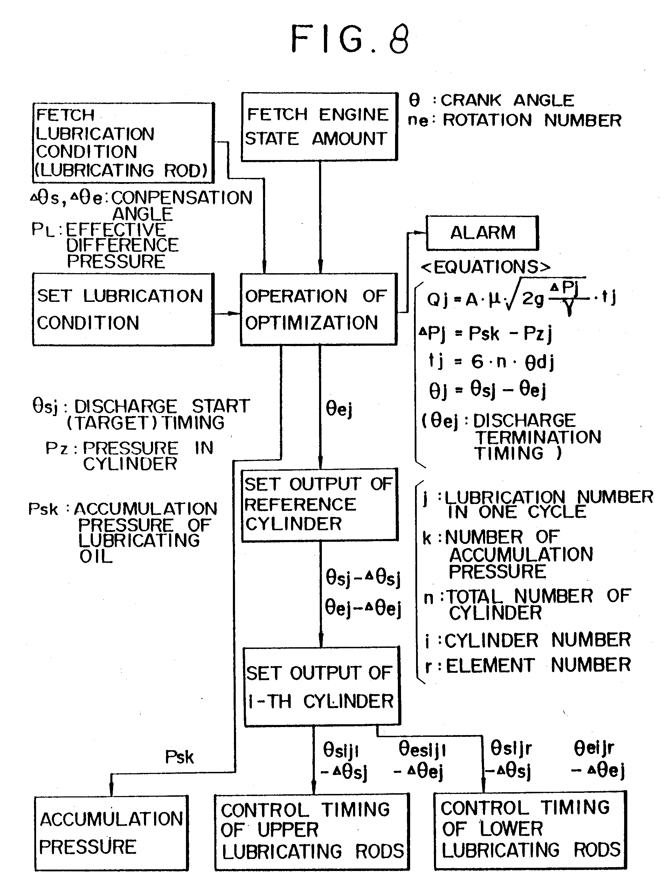

Figs. 6 to 8 are flow charts showing the above operations, in which Fig. 6 is a flow chart corresponding to a configuration of Fig. 2, Fig. 7 is a flow chart corresponding to a configuration of Fig. 3, and Fig. 8 is a flow chart corresponding to a configuration of Fig. 5. Suffixes j, k, n, i and r are a lubrication timing in one cycle, a number of accumulators, a total number of cylinders, the number of cylinder and the element number.

Consequently, while the electro hydraulic control valve 520 is opened, the lubricating oil having the amount Q set to the optimum is fed to the accumulator 511, the main valve 514, the electro hydraulic control valve 520 (distribution valve 522), the lubricating rod 523 and the cylinder in this order of the description.

Figs. 9(b), (c) and (d) show the case where the lubrication is made once, twice and four times in one cycle. It is apparent from the drawing that the lubrication can be made even if the lubrication timing is set to any time when a plurality of lubrications are made in one cycle since various pressures are set to the accumulators 511.

Further, when a temperature of the lubricating oil is low, the bypass command is supplied to the controller 508 prior to the operation of the engine so that the bypass valve 521 is opened (*9) and the lubricating oil can be circulated until the temperature of the oil becomes a proper temperature.

The controller 508 is supplied with detected values of the gas pressure detector 513 and the oil pressure detector 512 and when the gas pressure is smaller than the oil pressure, the controller opens the solenoid controlled valve 10 in order to protect a plug (made of rubber) in the accumulator (*2 - *4). Further, when the gas pressure is equal to substantially zero, it is determined as leakage of gas or explosion of the plug and an alarm is sent to the outside.

## Claims

1. A lubricator for cylinder of an internal combustion engine comprising at least one accumulator (511) for holding lubricating oil fed from an oil tank (502) by a pump (501) to a predetermined pressure, a solenoid controlled valve (509) disposed between the pump and the accumulator, one or more control valves (520) for feeding the lubricating oil in the accumulator to the cylinder trough lubricating rod (523), and a controller (508) for deriving one or-more end-of-lubrication timings ($\theta e'$) on the basis of the lubrication condition, the operation condition and one or more established start-of-lubrication timings ($\theta s'$) to supply to the control valve with a valve opening command when the crank angle is coincident with the start-of-lubrication timing ($\theta s'$) and with a valve closing command when the crank angle is coincident with the end-of-lubrication timing ($\theta e'$) and the operation condition involves a rate of rotation n of the engine and a crank angle $\theta$, characterized in that the lubricator comprises a plurality of accumulators (511-1 to 511-k) and in that said predetermined pressures for each accumulator are different from each other, that said controller selects an accumulator to be used on the basis of a lubrication condition and an operation to supply a switching command to the solenoid controlled valve and that the lubrication condition involves an optimum amount Q of lubricating oil corresponding to a load of the engine, a pressure Pz in the cylinder, an accumulator set pressure Psk, an effective differential pressure $P_L$, and correction angles $\Delta\theta$ s and $\Delta \theta$ e containing the discharge delay from the control valve (520) to the lubricating rod (523).

2. A lubricator according to Claim 1, wherein one or more distrubutor(s) (522) are arranged between said control valve (520) and lubricating rods (523) disposed at the cylinder.

3. A lubricator according to Claim 2, wherein lubricating rods (523) are disposed at the same level in the vertical direction of the cylinder.

4. A lubricator according to Claim 2, wherein lubricating rods (523) are disposed at a pluralyty of levels in the vertical direction of the cylinder.

5. A lubricator as claimed in any one of Claims 1 to 4, wherein there is provided a second control valve (521) disposed behind said control valve (520) to be opened and closed by a command from the controller (508) so that lubricating oil is bypassed to an oil tank.

**Patentansprüche**

1. Schmiervorrichtung für Zylinder einer Brennkraftmaschine mit mindestens einem Sammelbehälter (511) zum Halten von Schmieröl, das über eine Pumpe (501) von einem Öltank (502) zugeführt wird, auf einem vorbestimmten Druck, einem elektrischen Ventil (509), das zwischen der Pumpe und dem Sammelbehälter angeordnet ist, einem oder mehreren Regulierungsventilen (520) zum Zuführen des in dem Sammelbehälter befindlichen Schmieröls durch eine Schmierstange (523) zu dem Zylinder, und einem Regler (508) zur Ableitung von einer oder mehreren Ende-des-Schmierens-Zeiteinstellungen ($\theta e'$) auf der Basis der Schmierungskondition, der Betriebskondition und einer oder mehreren eingeführten Beginn-des-Schmierens-Zeiteinstellungen ($\theta s'$), um dem Regelventil ein Ventil-Öffnungskommando zuzuführen, wenn sich der Kurbelwinkel in Übereinstimmung mit der Beginn-der-Schmierung-Zeiteinstellung ($\theta s'$) befindet, und um dem Regelventil ein Ventil-Schließkommando zuzuführen, wenn sich der Kurbelwinkel in Übereinstimmung mit der Ende-der-Schmierung-Zeiteinstellung ($\theta e'$) befindet, und wobei die Betriebsbedingung eine Rotationsrate n der Maschine und einen Kurbelwinkel $\theta$ enthält, dadurch gekennzeichnet, daß die Schmiervorrichtung eine Vielzahl von Sammelbehältern (511-l bis 511-k) umfaßt und daß die vorbestimmten Drücke für jeden Sammelbehälter voneinander differieren, daß der Regler den zu verwendenden Sammelbehälter auswählt auf der Basis einer Schmierungskondition und einem Betrieb, um dem elektrischen Ventil ein Schaltkommando zuzuführen und daß die Schmierungskondition eine optimale Menge Q an Schmieröl, die zu einer Last der Maschine korrespondiert, einen Druck Pz in dem Zylinder, einen gesetzten Sammelbehälterdruck Psk, einen effektiven Differentialdruck $P_L$, und Berichtigungswinkel $\Delta \theta s$ und $\Delta \theta e$, die die Abgabeverzögerung von dem Regulierungsventil (520) zur Schmierstange (523) enthalten, einschließt.

2. Schmiervorrichtung nach Anspruch 1, worin eines oder mehrere Verteilermittel (8522) zwischen dem Regulierungsventil (520) und den Schmierstangen (523), die an dem Zylinder angeordnet sind, vorgesehen ist/sind.

3. Schmiervorrichtung nach Anspruch 2, worin die Schmierstangen (523) in derselben Höhe in vertikaler Richtung des Zylinders angeordnet sind.

4. Schmiervorrichtung nach Anspruch 2, worin die Schmierstangen (523) in einer Vielzahl von Höhen in vertikaler Richtung des Zylinders angeordnet sind.

5. Schmiervorrichtung nach einem der Ansprüche 1 bis 4, worin ein zweites Regulierungsventil (521) vorgesehen ist, das hinter dem Regulierungsventil (520) angeordnet ist, um durch ein Kommando des Reglers (508) geöffnet oder geschlossen zu werden, so daß Schmieröl zu einem Öltank umgeleitet wird.

**Revendications**

1. Graisseur pour cylindre d'un moteur à combustion interne, avec au moins un accumulateur (511) pour contenir un lubrifiant délivré à une pression prédéterminée par une pompe (501) à partir d'un réservoir d'huile (502), une soupape (509) commandée par solénoïde étant disposée entre la pompe et l'accumulateur, avec une ou plusieurs soupapes de commande (520) pour alimenter le cylindre avec du lubrifiant provenant de l'accumulateur au moyen d'une sonde de lubrification (523), avec une unité de commande (508) pour déterminer un ou plusieurs instants ($\theta e'$) de fin de lubrification à partir des conditions de lubrification, les conditions de fonctionnement et un ou plusieurs instants déterminés de début de lubrification ($\theta s'$) pour délivrer à la soupape de commande un ordre d'ouverture lorsque l'angle du vilebrequin coïncide avec l'instant ($\theta s'$) du début de la lubrification, avec un ordre de fermeture de soupape lorsque l'angle du vilebrequin coïncide avec l'instant ($\theta e'$) de la fin de lubrification, les conditions de fonctionnement comprenant un nombre de tours du moteur égal à n et un angle de vilebrequin $\theta$, caractérisé en ce que le graisseur comprend plusieurs accumulateurs (511-1 à 511-k), en ce que lesdites pressions déterminées sont différentes pour chaque accumulateur, que l'unité de commande choisit un accumulateur à utiliser sur la base d'un état de lubrification et d'une opération pour fournir un ordre de commutation à la soupape commandée par solénoïde, et que l'état de lubrification englobe une quantité optimale Q de lubrifiant correspondant à une charge du moteur, une pression Pz dans le cylindre, des pressions Psk dans les accumulateurs, une pression différentielle effective $P_L$, des angles de correction $\Delta\theta s$ et $\Delta\theta e$ déterminés par le délai allant de l'éjection de la soupape de commande (520) à l'arrivée à la sonde de lubrification (523).

2. Graisseur selon la revendication 1, dans lequel un ou plusieurs distributeurs (522) sont agencés entre la soupape de commande (520) et les sondes de lubrification (523) placées sur le cylindre.

3. Graisseur selon la revendication 2, dans lequel des sondes de lubrification (523) sont disposées au même niveau en direction verticale du cylindre.

4. Graisseur selon la revendication 2, dans lequel des sondes de lubrification (523) sont disposées sur plusieurs niveaux en direction verticale du cylindre.

5. Graisseur selon une des revendications 1 à 4, comprenant une seconde soupape de commande (521) disposée en aval de ladite soupape de commande (520) afin d'être ouverte et fermée par un ordre issu de l'unité de commande (508) de manière à dériver du lubrifiant vers un réservoir à huile.

# FIG.1

# FIG. 2

# FIG.3

# F I G. 4 (a)

523-1～523-4

523-5～523-8

522-1

522-2

# F I G. 4 (b)

523-1

523-5

523-8

523-4

523-2

523-7

523-6

523-3

522-1

522-2

# FIG.5

# FIG. 6

$\theta$ : CRANK ANGLE
ne : ROTATION NUMBER

FETCH LUBRICATION CONDITION (LUBRICATING ROD)

FETCH ENGINE STATE AMOUNT

$\Delta\theta s, \Delta\theta c$ : CONPENSATION ANGLE
$P_L$ : EFFECTIVE DIFFERENCE PRESSURE

ALARM

SET LUBRICATION CONDITION

OPERATION OF OPTIMIZATION

<EQUATIONS>

$$Q_j = A \cdot \mu \sqrt{2g \frac{\Delta P_j}{\gamma}} \cdot t_j$$

$$\Delta P_j = P_{sk} - P_{zj}$$

$$t_j = 6 \cdot n \cdot \theta_{dj}$$

$$\theta_j = \theta_{sj} - \theta_{ej}$$

$Q_j$ : LUBRICATING OIL AMOUNT

$\theta_{sj}$ : DISCHARGE START (TARGET) TIMING

$P_z$ : PRESSURE IN CYLINDER

$P_{sk}$ : ACCUMULATION PRESSURE OF LUBRICATING OIL

$\theta_{ej}$

( $\theta_{ej}$ : DISCHARGE TERMINATION TIMING )

SET OUTPUT OF REFERENCE CYLINDER

$j$ : NUMBER OF LUBRICATION TIMING IN ONE CYCLE

$k$ : NUMBER OF ACCUMULATION PRESSURE

$\theta_{sj} - \Delta\theta_{sj}$
$\theta_{ej} - \Delta\theta_{ej}$

$n$ : TOTAL NUMBER OF CYLINDER

$i$ : CYLINDER NUMBER

SET OUTPUT OF $i$-TH CYLINDER

$\theta_{sij}$ $\theta_{eij}$
$- \Delta\theta_{sj}$ $- \Delta\theta_{ej}$

$P_{sk}$

ACCUMULATION PRESSURE

CONTROL TIMING OF LUBRICATING ROD ( $i$ )

# FIG. 7

FETCH
LUBRICATION
CONDITION
(LUBRICATING. ROD)

FETCH ENGINE
STATE AMOUNT

$\theta$ : CRANK ANGLE
ne : ROTATION NUMBER

$\Delta\theta s, \Delta\theta e$ : CONPENSATION
ANGLE
PL : EFFECTIVE
DIFFERENCE
PRESSURE

ALARM

<EQUATIONS>

$$Q_j = A \cdot \mu \cdot \sqrt{2g \frac{\Delta P_j}{\gamma}} \cdot t_j$$

SET LUBRICATION
CONDITION

OPERATION OF
OPTIMIZATION

$$\Delta P_j = P_{sk} - P_{zoj}$$

$$t_j = 6 \cdot n \cdot \theta d_j$$

$$\theta_j = \theta_{sj} - \theta_{ej}$$

$Q_j$ : LUBRICATING OIL
AMOUNT

$\theta_{sj}$ : DISCHARGE START
(TARGET) TIMING

$\theta_{ej}$

$(\theta_{ej}$ : DISCHARGE
TERMINATION
TIMING )

$P_z$ : PRESSURE IN
CYLINDER

SET OUTPUT OF
REFERENCE
CYLINDER

$P_{sk}$ : ACCUMULATION
PRESSURE OF
LUBRICATING
OIL

j : NUMBER OF
LUBRICATION TIMING
IN ONE CYCLE

k : NUMBER OF
ACCUMULATION
PRESSURE

$\theta_{sj} - \Delta\theta_{sj}$

$\theta_{ej} - \Delta\theta_{ej}$

n : TOTAL NUMBER OF
CYLINDER

i : CYLINDER NUMBER

SET OUTPUT OF
i-TH CYLINDER

Psk

$\theta_{slj}$ , $\theta_{elj}$
$- \Delta\theta_{sj}$   $- \Delta\theta_{ej}$

$\theta_{si(j+1)}$ , $\theta_{ei(j+1)}$
$-\Delta\theta_{s(j+1)}$   $- \Delta\theta_{e(j+1)}$

ACCUMULATION
PRESSURE

CONTROL TIMING
OF UPPER
LUBRICATING RODS

CONTROL TIMING
OF LOWER
LUBRICATING RODS

# FIG. 8

$\theta$ : CRANK ANGLE
ne: ROTATION NUMBER

```
FETCH
LUBRICATION
CONDITION
(LUBRICATING ROD)
```

```
FETCH ENGINE
STATE AMOUNT
```

$\Delta\theta s, \Delta\theta e$ : CONPENSATION ANGLE
$P_L$ : EFFECTIVE DIFFERENCE PRESSURE

```
ALARM
```

<EQUATIONS>

$$Qj = A \cdot \mu \cdot \sqrt{2g \frac{\Delta Pj}{\gamma}} \cdot tj$$

$$\Delta Pj = Psk - Pzj$$

$$tj = 6 \cdot n \cdot \theta dj$$

$$\theta j = \theta sj - \theta ej$$

($\theta ej$ : DISCHARGE TERMINATION TIMING )

```
SET LUBRICATION
CONDITION
```

```
OPERATION OF
OPTIMIZATION
```

$\theta sj$ : DISCHARGE START (TARGET) TIMING

$Pz$ : PRESSURE IN CYLINDER

$Psk$ : ACCUMULATION PRESSURE OF LUBRICATING OIL

$\theta ej$

```
SET OUTPUT OF
REFERENCE
CYLINDER
```

j : LUBRICATION NUMBER IN ONE CYCLE

k : NUMBER OF ACCUMULATION PRESSURE

n : TOTAL NUMBER OF CYLINDER

i : CYLINDER NUMBER

r : ELEMENT NUMBER

$\theta sj - \Delta\theta sj$

$\theta ej - \Delta\theta ej$

```
SET OUTPUT OF
i-TH CYLINDER
```

$Psk$

$\theta sij1$
$-\Delta\theta sj$

$\theta esij1$
$-\Delta\theta ej$

$\theta sijr$
$-\Delta\theta sj$

$\theta eijr$
$-\Delta\theta ej$

```
ACCUMULATION
PRESSURE
```

```
CONTROL TIMING
OF UPPER
LUBRICATING RODS
```

```
CONTROL TIMING
OF LOWER
LUBRICATING RODS
```

# FIG. 9 (a)

# FIG. 9 (b)

# FIG. 9 (c)

# FIG. 9 (d)

# F I G .10 (a)

# F I G .10 (b)